# EUROPEAN PATENT APPLICATION

(11) **EP 0 549 071 A1**
(43) Date of publication of application: **30.06.1993**
(21) Application number: 92204024.1
(22) Date of filing: 18.12.1992
(51) Int. Cl.: H04L 9/32

(54) **Method and system for verifying an authenticated digital datum**

(30) Priority: 20.12.1991 NL 9102145
(71) Applicant: STAAT DER NEDERLANDEN te dezen vertegenwoordigd door de Directeur-Generaal van de Rijkswaterstaat, NL-2596 AA The Hague (NL)
(72) Inventor: Stoelhorst, Henk Jacob, NL-2623 EB Delft (NL); Chaum, David, NL-1098 SJ Amsterdam (NL); Gerritse, Jacobus Johannes, NL-3734 EM Den Dolder (NL); van Wijk, Dirk Peter, NL-2381 EC Zoeterwoude (NL)
(74) Representative: van der Arend, Adrianus G.A., Ir.

(57) **Abstract**

Method and system for verifying an authenticated digital datum which has been obtained starting from an unauthenticated digital datum by applying a particular cryptographic algorithm within a system having a number of components operating as participants. A first component supplies the authenticated datum to a second component which checks the genuineness of the authenticated datum it has received. The first component has a set of elements which represent numbers and which are divided into rows. The elements of a row have been obtained by applying one-way functions from elements having a lower index. The unauthenticated datum is represented by the numbers which are represented by the last elements of the rows. The set of elements, or the numbers which they represent, is different for each unauthenticated datum. After the second component has received the authenticated datum, the second component supplies to the first component an index for each row, whereupon the first component must return the number which is represented by the element having the index received. Starting from the numbers received and from the indices sent, the second component evaluates said numbers up to the last numbers of the rows, i.e. carries out one-way functions as often as it considers necessary to get to the numbers associated with the last elements. The second component compares the result of the evaluation with the previously received last numbers of the rows, and in the case of identity the authenticated datum is adjudged to be genuine.

## Description

The invention relates to a method for verifying a digital datum which, starting from an unauthenticated digital datum, has been authenticated cryptographically according to a particular algorithm, within a system having a number of components which operate as participants, a first component supplying the authenticated datum to a second component which checks the genuineness of the authenticated datum which it has received, and the first component, at the request of the second component, also providing information, to the second component, which is suitable for the second component's carrying out a check of the genuineness of the authenticated datum.

The algorithm can be any algorithm which is suitable for allowing only an authorised component to authenticate an unauthenticated digital datum, and which makes it possible to get back from the authenticated digital datum, by applying the algorithm, the unauthenticated datum. An algorithm of this type is, for example, the RSA (Rivest, Shamir, Adleman) algorithm.

An authenticated digital datum is sometimes called "signature". Because the word "signature" is also used for other types of data, the use of this word is avoided hereinafter. The authenticated digital datum may, for example, represent a digital cheque, which has been authenticated by a bank and which can be used for making payments.

It would be possible for a component or participant within the system to have registered an already used authenticated digital datum originating from another participant, with the intention of itself reissuing said authenticated datum.

For the purpose of the second component's checking the genuineness of an authenticated datum supplied by the first component to the second component, in order to trace possible fraud, a method has been proposed earlier, in which both the first component and the second component apply an enciphering algorithm, for example a DES algorithm or an algorithm based on DES, with a key which is secret from the other component. In this method, the second component sends a request to the first component which contains a particular number and which is combined by the first component with information relating to the authenticated datum, after which the combined datum is enciphered by means of the algorithm, the enciphered datum is sent to the second component, the second component deciphers the enciphered datum and, on the basis thereof, is able to establish whether the authenticated datum, which may also have first been received separately, is genuine. This known method has the drawback that each component requires its own secret key, and there is the danger that a component of the system, which operates as the first component, finds out the secret key of the second component and can then commit the said fraud. Furthermore, if there is a number of components which can operate as a first component, each with its own secret key, the algorithm used and the secret key of the second component must be suitable for providing the ability to check an authenticated datum received from any component working as a first component. This makes the generation and assignment of keys complex and more difficult to monitor. Another drawback of the known method is the fact that the first and second components both have to calculate an enciphering algorithm, which may require too much time for some applications, in which case the alternative of omitting the checking mechanism or of applying simple or algorithms and simpler secret keys must be chosen, which however makes the method less resistant to fraud. Another drawback of the known method is the fact that the secret key of a first component is fixed, as a result of which there is the risk that after repeated use the identity of the first component or of the user thereof can be found out, and the pattern with which authenticated data are issued by the first component to one or different second components of the system can be followed.

In the case of the known method it would also be possible, instead of a DES algorithm or an algorithm based on DES, to use an RSA algorithm. The calculations required for applying an algorithm of this type are, however, even more expensive and time-consuming, which in many cases will make the use thereof impossible.

The object of the invention is to overcome the drawbacks of the known method.

This object is achieved according to the invention by means of the method as described in Claim 1. As a result it is not possible for the first component to supply to the second component a genuine authenticated digital datum which has been obtained based on an unauthenticated digital datum which the first component has not itself (co-)assembled. No secret keys are required in the first and second components, which makes the method simple to use and offers maximum resistance to fraud. Futhermore, the set of elements can be made available in time by the first component, whereupon, at the request of the second component, only some of the elements therefrom need be sent, which considerably reduces the processing time within the first component and the communication time.

Other properties and advantages of the invention will become apparent from the following explanation by reference to the drawings, in which:
Figure 1 shows a diagram of a system which is suitable for applying the invention;
Figure 2 shows another embodiment of the system;
Figure 3 shows a set of elements for use when applying the method according to the invention; and
Figure 4 shows a representation of a one-way function for use in the method according to the invention.

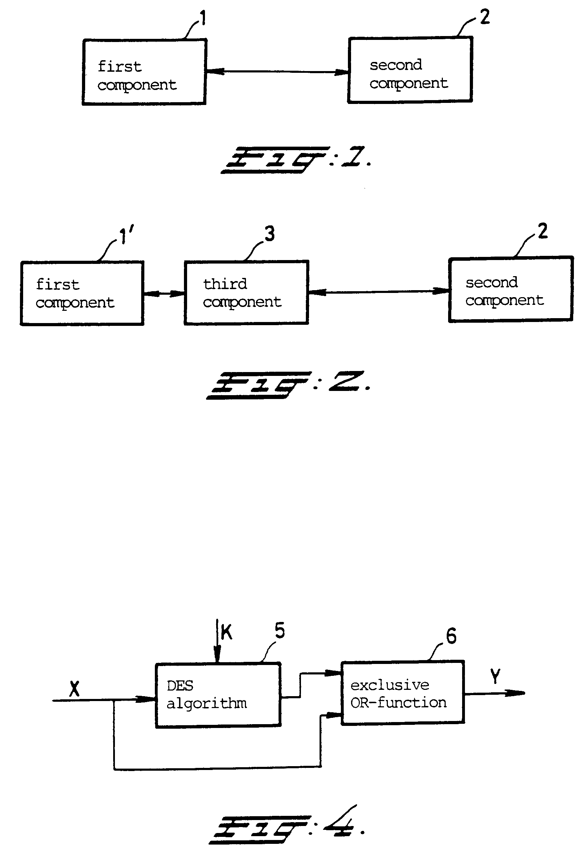

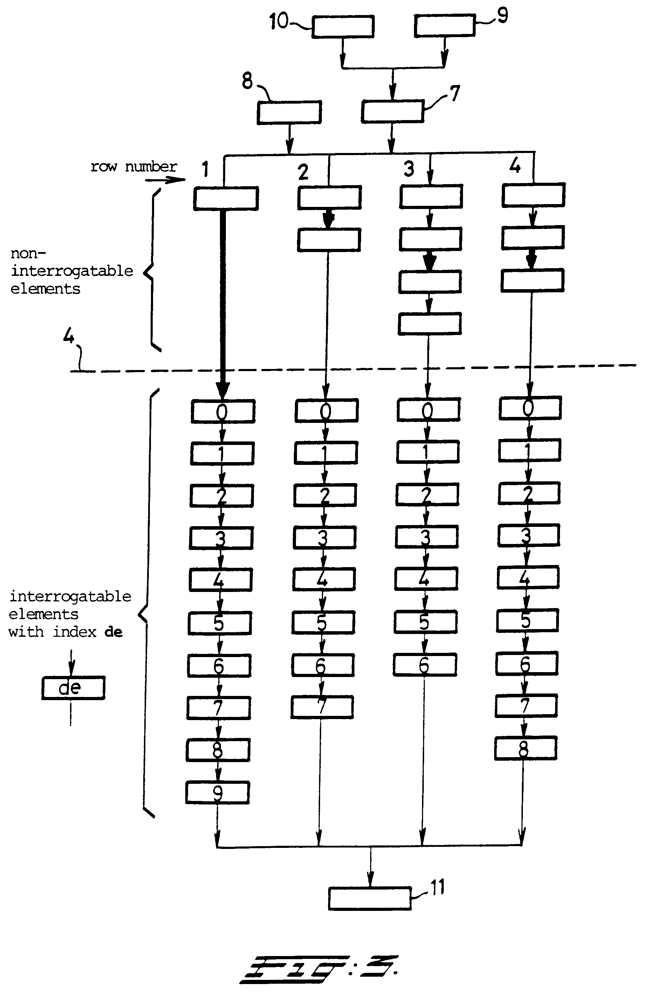

The system shown in Figure 1 comprises a first component 1 and a second component 2, which may be computers. With reference to Figure 2, the first component 1' may for example be a card comprising a microcomputer, sometimes called "smart card", which communicates via a third component 3 with the second component 2.

Figure 3 shows an example of a set of elements which represent numbers and which are divided into four rows r = 1 to r = 4, inclusive. The elements are indicated in Figure 3 by small rectangles. Each row comprises a number of non-interrogatable elements, shown above the dashed line 4 in Figure 3, and a number of interrogatable elements with the indices **de**, which are shown in the associated rectangles. In Figure 3 the indices of the elements increase in each row from top to bottom. The second and each following element of each row has been obtained from the preceding element by applying a one-way function.

One-way functions are known per se, and Figure 4 gives an example. According to Figure 4, a DES algorithm represented by a box 5, or an algorithm based on a DES algorithm, receives an input variable x and supplies an output value to an exclusive OR function represented by a box 6, which is also called an XOR function, which in addition receives the input variable x and which supplies an output variable y. The output value of the DES algorithm depends on a key k which is allowed to be known. If, in the case of a DES-based algorithm, the variables x, y and k are sufficiently large, it is virtually impossible to obtain the input variable x by inverse calculation from the variable y. The larger the variables x, y and/or k, the more difficult it becomes to obtain x from y by inverse calculation, and the stronger the function is called.

In Figure 3, each row up to, and including, the first interrogatable element (**de** = 0) has an element which is determined from an element preceding it by a stronger one-way function and represented by a more solid arrow than other one-way functions used for the row. This makes it more difficult to calculate backwards from an interrogatable element to preceding elements or numbers which, as explained later, may be origin numbers. This prevents, in the case that the algorithm for generating the elements is known and the first element of a row has been successfully obtained by inverse calculation, the other elements of the set or even a completely new set being calculated.

Although the set shown in Figure 3 comprises a number of non-interrogatable elements, these are not really required for applying the invention.

The rows may have different numbers of elements, arbitrarily divided into interrogatable and non-interrogatable elements, and the numbers may be different for different rows. If each row has only one non-interrogatable element and the numbers of elements of all the rows are equal, the method can however be implemented more simply.

There is assigned to each unauthenticated, and therefore to each authenticated, digital datum a set of elements in such a way as to make, with a high probability, sets of elements for different data different from each other.

For the purpose of generating a set of elements, the first elements of the rows can be determined from a data origin element, which is assigned to a datum to be authenticated and which is indicated by the rectangle 7, said data origin element representing a number, and from an index, which is indicated by the rectangle 8, of the row in question. Use can be made in this instance of an exclusive OR function, the data origin element 7 and the row index 8 being used as input variables, and the output variable representing the first element of the corresponding row.

The unauthenticated datum can be a datum from a packet of unauthenticated data, where the packet can have a packet origin element, and the datum within the packet an index, assigned to it. The data origin element 7 may then have been determined on the basis of the packet origin element indicated by means of the rectangle 9 and the index, indicated by means of the rectangle 10, of the datum within the packet. For the purpose of determining the data origin element 7, use can also again be made of an exclusive OR function with the packet origin element 9 and the datum index 10 as input variables, and the data origin element as the output variable.

The packet origin element 9 can be determined, although this is not shown, by an attribute of the first component 1 and a generated random number.

Consideration had been given to explaining the method according to the invention by reference to flow diagrams which show the operation of each of the components 1, 1', 2, 3, in each phase of processing within, and communication between, the components. Because this would not simplify the understanding of the invention, it was decided not to do so.

The second component 2 knows the one-way functions which are used for determining the interrogatable elements having indices 1 and higher and the numbers of interrogatable elements per row.

The unauthenticated datum, represented in Figure 3 by the rectangle 11, is assembled from the last elements (numbers) of the rows. The unauthenticated datum 11 is offered for authentication to a component (not shown) which, in response thereto, supplies an authenticated datum. If the data represent a cheque, said other component can be a computer of a bank.

The first component 1 stores each pair of unauthenticated and authenticated data. As an alternative, of each unauthenticated datum 11 only the data origin element 7 may be stored, because the first component 1, possibly supported by the third component 3, is always able to recalculate therefrom the unauthenticated datum 11. The same applies to the interrogatable elements of the set: the first component 1 may store them permanently with each pair of unauthenticated and authenticated data, or may recalculate them, whenever required, from a preceding element or the origin element 7. As a result, the memory capacity of the first component 1 can be limited.

After the first component 1 has sent an authenticated datum to the second component 2, the second component 2 sends back a request to the first component 1, which request comprises, for at least one row of the set of elements, an index of the interrogatable elements, for example the indices 5, 4, 2 and 7 of the rows 1, 2, 3, 4, respectively, of Figure 3. The first component 1 now has to send back, for each of said indices, the associated element (number) to the second component 2. The second component 2 evaluates these received numbers on the basis of the indices sent, and by applying the one-way functions in question to elements which should be the last elements of the rows. That means that the second component 2 carries out a one-way function four times for the element received from row 1, three times for the second row, four times for the third row, and carries out a one-way function once for the fourth row. Subsequently, the second component 2 compares the result of the evaluation with the unauthenticated datum which it gets back from the authenticated datum by applying the algorithm. If the comparison results in identity, the authenticated datum is adjudged to be genuine, i.e. the authenticated datum can be used for a transaction.

In the case of the method according to the invention it is considered to be virtually impossible that a component, based on an unauthenticated datum 11 obtained by application of the enciphering algorithm, should be able to calculate the elements of the set of interrogatable elements.

It is to be noted that the choice of the number of elements, in particular of the interrogatable elements, depends on the strength of the one-way functions.

Assume that a first component 1a, of a number of first components 1, has supplied a genuine authenticated datum to a second component 2, that the second component has subsequently sent the indices of interrogatable elements of the rows of the set of elements of the first component 1a, the first component 1a, in response thereto, has sent the elements asked for with those indices, and that another first component 1b has listened in to the communication between the first component 1a and the second component 2. If the one-way functions are public, the first component 1b can only calculate elements having higher indices than the indices of the elements received. For each fraudulent use of the authenticated datum by the first component 1b, the probability for each row is on average 1/2 that the second component 2 asks for an element of a row with an index which is equal to or higher than the one overheard before. As a result, for each row by which the set of elements is chosen to be larger, the probability that the second component only asks for elements known to the first component 1b is reduced by a factor of two. That means that, in the case of a set of, for example, 10 rows, the probability of a successful attempted fraud is 1 in 1024. The larger the number of rows of the set, the smaller is the probability of success of the attempted fraud. Because the second component 2 can detect each failed attempted fraud, since no answer or a wrong answer is received back from the first component 1b, the second component 2 can take suitable measures at that time, for example raise an alarm and establish the identity of the first component 1b, and block further attempts.

Preferably, measures are taken to forestall the message sent by the second component 2 from containing exclusively the lowest indices of the rows of interrogatable elements, in order to forestall a fraudulent component 1 or 2 from overhearing the elements sent in response thereto and from calculating therefrom the whole batch of elements, whereupon said fraudulent component, by using the same and the associated authenticated datum overheard at the same time, is able to reuse this datum. Said measures can simply consist in the second component 2 asking for an element of at least one row, the index of which element is not the lowest index of the interrogatable elements. As said earlier, it is virtually impossible for the fraudulent component to calculate, on the basis of the at least one element having a higher index than the lowest index of the row of interrogatable elements, an element with a lower index, as a result of which misuse of the set of elements is forestalled. In essence, this has the same effect as if the message, which is sent by the second component and which comprises indices of interrogatable elements, also were to comprise a checksum which consists of the sum of the (radix-1) complements of said indices. If the checksum is also represented by an index of at least one additional row of interrogatable components, it will be the case that, if the abovementioned indices are each the lowest numbers of interrogatable elements, the index of the element associated with the checksum of the additional row of interrogatable elements is always larger than the lowest index of the additional row. In the latter case there would, if the first component 1 also calculates the checksum and the third component 3 cannot influence this, be no point for the third component 3 to ask the first component 1, prior to the first use of the authenticated datum, for all the elements with the lowest indices of rows which are not the additional row(s) assigned to the checksum, because the first component 1 will then always supply an element of the additional row having a higher index than the lowest index thereof.

In addition, the first component 1 may be constructed in such a way that, upon request from outside, the authenticated datum and/or requested elements of the set of elements associated with the datum are supplied only once, and that this condition cannot be changed from outside the first component. This can be achieved, for example, if the first component is a smart card. As a consequence of these measures it is virtually impossible for an authenticated datum to be used more than once.

## Claims

1. Method for verifying a digital datum which, starting from an unauthenticated digital datum, has been authenticated cryptographically according to a particular algorithm, within a system having a number of components which operate as participants, a first component supplying the authenticated datum to a second component which checks the genuineness of the authenticated datum which it has received, and the first component, at the request of the second component, also providing information, to the second component, which is suitable for the second component's carrying out a check of the genuineness of the authenticated datum, **characterised in that** the unauthenticated datum comprises a batch of subdata, each of which are represented by the last element of a row of elements, individually assigned to the subdatum, out of a number of rows of elements which represent numbers and which form a set of elements assigned to the unauthenticated datum, each second and following element of each row is determined, by application of one or more one-way functions, from the directly preceding element of the row, the successive elements of each row up to, i.e. excluding, an element having a predetermined index, hereinafter called the first interrogatable element, are kept secret from the second component, the second component knows the one-way functions which are used for determining elements which follow the first interrogatable element and which are interrogatable elements,
the second component upon receiving the authenticated datum sends a request to the first component which comprises the indices of interrogatable elements of rows corresponding to subdata, which elements are to be sent by the first component to the second component, the indices contained in the request, prior to the transmission of the request, not previously having been communicated to the first component, the second component, by applying the one-way functions in question, evaluates all the elements which have been received from the first component in response to its request on the basis of the indices of the elements asked for, up to elements which should be the last elements of the respective rows, the second component compares the result of the evaluation with the datum it gets back by applying the algorithm, and adjudges the authenticated datum to be genuine if the comparison results in an identity.

2. Method according to claim 1, **characterised in that** additional rows of elements are assigned to a checksum which consists of the sum of the (radix-1) complements of the indices of the request which relate to the rows assigned to the unauthenticated datum, the request contains additional indices which relate to the additional rows and which represent the checksum, the first component, prior to the request, sends the last elements of the additional rows to the second component, the first component, upon receiving the request, sends additional elements, indicated by additional indices, of the additional rows to the second component, the second component evaluates the received additional elements in the stated manner up to the last elements of the additional rows and compares the result of the evaluation with the previously received last elements of the additional rows and adjudges the authenticated datum to be genuine if from the last-mentioned comparison also an identity results.

3. Method according to claim 1 or 2, **characterised in that** the first component uses a set of elements only for one request for supplying interrogatable elements thereof.

4. Method according to one of the preceding claims, **characterised in that** the first component does not comply with a request for supplying interrogatable elements having the lowest indices from rows assigned to the unauthenticated datum.

5. Method according to one of the preceding claims, **characterised in that** for the unauthenticated datum the first element of each row is determined from a data origin element assigned to the datum and an index of the row of the datum.

6. Method according to claim 5, **characterised in that** the first element of a row is determined by an exclusive-or function of the data origin element and the index of the row.

7. Method according to claim 5 or 6, **characterised in that** the data origin element is determined from a packet origin element assigned to a packet of data origin elements and an index of the data origin element within the packet.

8. Method according to claim 7, **characterised in that** the data origin element is determined by application of an exclusive-or function between the packet origin element and the index of the data origin element within the packet.

9. Method according to claim 7 or 8, **characterised in that** the packet origin element is determined by an attribute of the first component and a generated random number.

10. Method according to one of the preceding claims, **characterised in that** for the purpose of determining at least one element having a lower index than that of the second interrogatable element of a row, a stronger one-way function is applied than a one-way function which is applied for determining an element having a higher index than that of the first interrogatable element.

11. Method according to claim 10, **characterised in that** with the exception of the stronger one-way function, the one-way functions are identical.

12. Method according to one of the preceding claims, **characterised in that** the numbers of elements of all the rows are equal.

13. Method according to one of the preceding claims, **characterised in that** the first interrogatable element of each row is the second element of the row.

14. Method according to one of the preceding claims, **characterised in that** the communication between the first and second components takes place via a third component.

15. System suitable for applying the method according to one of the preceding claims.

16. System according to claim 15, **characterised in that** the first component is a card having a microcomputer ("smart card").
